# EUROPÄISCHE PATENTSCHRIFT

(11) **EP 0 921 363 B1**
(45) Veröffentlichungstag und Bekanntmachung des Hinweises auf die Patenterteilung: **25.08.2004**
(21) Anmeldenummer: 98117909.6
(22) Anmeldetag: 22.09.1998
(51) Int. Cl.: F25B 49/02, G05D 13/62, F24F 11/00

(54) **Verfahren zur Regelung der Drehzahl eines Kompressormotors eines Kühl- oder Gefriergerätes**
Method for regulating the rotation speed of a compressor motor for a refrigerating or freezing apparatus
Procédé de réglage de la vitesse de rotation d'un moteur de compresseur pour un appareil de réfrigération ou de congélation

(30) Priorität: 02.12.1997 DE 19753425
(43) Veröffentlichungstag der Anmeldung: 09.06.1999
(73) Patentinhaber: Liebherr-Hausgeräte Ochsenhausen GmbH, 88416 Ochsenhausen (DE)
(72) Erfinder: Gerner, Herbert, 88416 Erlenmoos (DE)
(74) Vertreter: Gossel, Hans K., Dipl.-Ing.

(56) Entgegenhaltungen:
- EP-A- 0 270 474
- WO-A-98/15790
- US-A- 4 671 457
- US-A- 5 115 968
- US-A- 5 323 619
- US-A- 5 410 230

## Beschreibung

Die Erfindung betrifft ein Verfahren zur Regelung der Drehzahl eines Kompressormotors eines Kühl- oder Gefriergeräts mit einem Thermostaten, der die Ein- und Ausschaltsignale für den Kompressormotor erzeugt, bzw. den Kompressor einschließlich einer eventuell zugehörigen Steuereinheit ein- und ausschaltet.

Zur Verwendung in Kältemittelkreisläufen von Kühl- und Gefriergeräte sind Kompressoren bekannt, die von Elektromotoren angetrieben werden, deren variable Drehzahl durch zugehörige Steuereinheiten einstellbar ist.

Es ist bekannt, empirisch für die einzelnen Typen der Kühl- und Gefriergeräte eine vorbestimmte günstige Laufzeit festzulegen und zu dieser eine Drehzahl des Kompressormotors zu bestimmen, so daß unter Berücksichtigung der festgelegten Drehzahl unter üblichen Bedingungen die vorbestimmte günstige Laufzeit eingehalten wird. Eine vorgegebene Laufzeit kann aber beispielsweise dann nicht eingehalten werden, wenn durch Einlagerung von Kühl- oder Gefriergut der Kältebedarf steigt oder wenn durch häufiges Öffnen der Gerätetür eine erhöhte Wärmezufuhr erfolgt.

Der Energieverbrauch eines Kühl- oder Gefriergeräts hängt unter anderem von der Festlegung der Laufzeit des Kompressormotors ab, wobei grundsätzlich davon ausgegangen werden kann, daß ein sparsamer Betrieb erreicht wird, wenn die Laufzeiten des Kompressormotors lang sind. Einer Optimierung der Laufzeiten des Kompressormotors bezogen auf den Energieverbrauch kann bei den bekannten Geräten aber nicht erreicht werden, weil die günstigen langen Laufzeiten nur in einem ungestörten stationären Betrieb erreicht werden. Aus der WO-A-98 15790 ist ein Verfahren zur Regelung der Drehzahleines Kompressormotors eines Kühl- oder Gefriergeräts mit einem Thermostaten bekannt.

Aufgabe der Erfindung ist es, ein Verfahren der eingangs angegebenen Art zu schaffen, das weitgehend unabhängig von dem jeweiligen Beladungszustand und der Beladungszeit eines Kühl- oder Gefriergeräts und unabhängig von der Häufigkeit der Öffnungen der Gerätetür günstige lange Laufzeiten des Kompressormotors gewährleistet.

Erfindungsgemäß wird diese Aufgabe dadurch gelöst, daß bezogen auf das Gerät eine vorbestimmte günstige Laufzeit des Kompressors bei einer Grunddrehzahl des den Kompressor antreibenden Elektromotors bestimmt wird, daß die Zeit bis zum Ausschaltzeitpunkt gemessen und die Drehzahl des Kompressormotors kontinuierlich oder in aufeinanderfolgenden Stufen erhöht wird, wenn der Thermostat innerhalb der vorbestimmten Laufzeit den Kompressormotor nicht ausschaltet, und daß nach dem erneuten Einschalten des Kompressormotors durch den Thermostaten dieser mit einer vorbestimmten, gegenüber der letzten Schlußdrehzahl erniedrigten Drehzahl wieder anläuft, die aus der Anfangsdrehzahl der vorhergehenden Laufzeit, der Enddrehzahl der vorhergehenden Laufzeit und der Zeitdifferenz der vorhergehenden Laufzeit bestimmt wird.

Hat der Thermostat den Kompressormotor nach einer Zeit ausgeschaltet, die länger ist als die vorbestimmte günstige Laufzeit, ist die Drehzahl des Kompressormotors gegenüber der Anfangsdrehzahl dieser Laufzeit erhöht worden, so daß davon ausgegangen werden kann, daß die erhöhte Schlußdrehzahl höher ist als die Drehzahl, die für die folgende Laufzeit benötigt wird, wenn diese gleich der vorbestimmten günstigen Laufzeit sein soll. Aus diesem Grunde kann also die Anfangsdrehzahl des Kompressormotors für die folgende Laufzeit gegenüber der Schlußdrehzahl der letzten Laufzeit erniedrigt werden, wenn diese länger war als die vorbestimmte günstige Laufzeit.

Hat der Thermostat den Kompressormotor nicht innerhalb der vorbestimmten günstigen Laufzeit ausgeschaltet, erfolgt eine Drehzahlerhöhung, so daß dadurch auch die Kälteleistung entsprechend erhöht wird. Die vorbestimmte günstige Laufzeit wird dabei nur um eine geringe Laufzeit erhöht, weil während dieser verlängerten Laufzeit die dem Gerät zugeführte Kälteleistung durch Erhöhung der Drehzahl des Kompressormotors erhöht wird.

Hat der Thermostat den Kompressormotor vor Ablauf der vorbestimmten günstigen Laufzeit ausgeschaltet, ist während dieser kürzeren Laufzeit die Drehzahl des Kompressormotors konstant und zu hoch gewesen, um die vorbestimmte günstige Laufzeit einzuhalten. Aus diesem Grund wird für die folgende Laufzeit die Anfangsdrehzeit des Kompressormotors gegenüber der Schlußdrehzahl der vorhergehenden Laufzeit um einen bestimmten Betrag abgesenkt, der aus der Laufzeit und der Drehzahl der letzten Laufzeit ermittelt wird.

Nach einer anderen Ausführungsform des erfindungsgemäßen Verfahrens kann die niedrigere Drehzahl, mit der der Kompressormotor nach einer Laufzeit wieder anläuft, die kürzer als die vorbestimmte günstige Laufzeit gewesen ist, durch Absenkung der Drehzahl um einen bestimmten Betrag erreicht werden.

Ausführungsbeispiele der Erfindung werden nachstehend anhand von Diagrammen näher erläutert.
- Fig. 1: zeigt die Laufzeit in Abhängigkeit von der Kompressordrehzahl an einer ersten Variante und
- Fig. 2: ein Flußdiagramm der Variante nach Fig. 1.

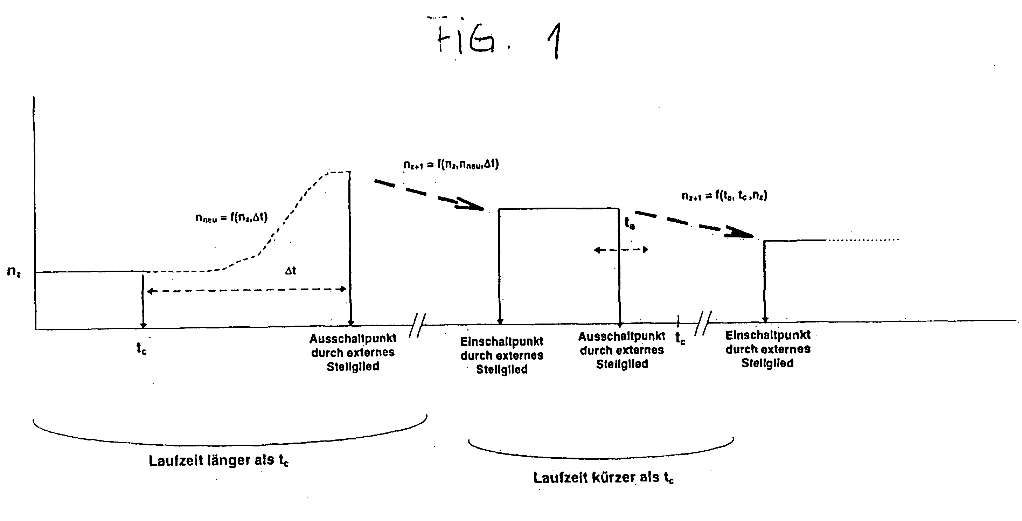

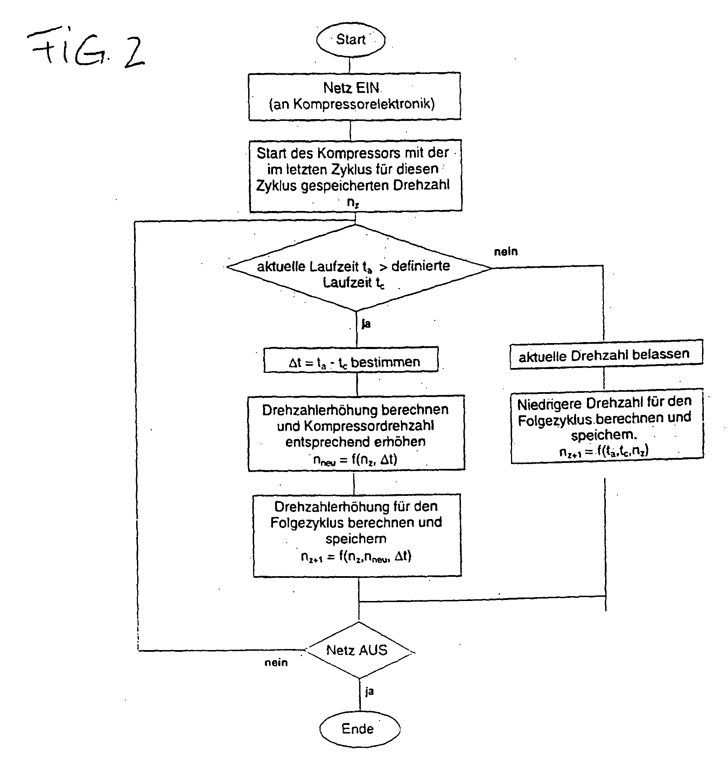

Die Erfindung wird anhand der Fig. 1 und 2 näher erläutert.

Empirisch wird für ein Kühl- oder Gefriergerät eine Grunddrehzahl des Kompressormotors n_{z} ermittelt, bei der der Kompressormotor für eine bestimmte günstige Laufzeit t_{c} läuft.

Schaltet der Thermostat den mit der Drehzahl n_{z} laufenden Kompressormotor nicht nach der vorbestimmten günstigen Laufzeit t_{c} ab, wird die Drehzahl des Kompressormotors in Stufen oder kontinuierlich bis zum Ausschaltzeitpunkt erhöht, wobei die aktuelle Laufzeit tₐ gemessen wird, die gleich der Laufzeit t_{c} + Δt ist.

Für die folgende Laufzeit wird eine erneute Anfangsdrehzahl bestimmt, die eine Funktion der Anfangsdrehzahl der vorherigen Laufzeit, der Erhöhung der Drehzahl während dieser Laufzeit und der Zeit Δt ist, um die die Laufzeit gegenüber der vorbestimmten günstigen Laufzeit t_{c} verlängert worden ist.

Ist die aktuelle Laufzeit tₐ kleiner als die vorbestimmte günstige Laufzeit t_{c}, so wird für den Folgezyklus eine niedrigere Anfangsdrehzahl bestimmt, die eine Funktion der Anfangsdrehzahl n_{z} des aktuellen Zyklus, der aktuellen Laufzeit tₐ und der vorbestimmten günstigeren Laufzeit t_{c} ist.

Das erfindungsgemäße Verfahren für die Bestimmung der Anfangsdrehzahlen zu Beginn einer jeden Laufzeit ist aus Fig. 2 ersichtlich.

## Patentansprüche

1. Verfahren zur Regelung der Drehzahl eines Kompressormotors eines Kühloder Gefriergeräts mit einem Thermostaten, der die Ein- und Ausschaltsignale für den Kompressormotor erzeugt, bzw. den Kompressor einschließlich einer eventuell zugehörigen Steuereinheit ein- und ausschaltet,
**dadurch gekennzeichnet,**
**dass** bezogen auf das Gerät eine vorbestimmte günstige Laufzeit (t_{c}) des Kompressors bezogen auf den Energieverbrauch des Kompressormotors bei einer Grunddrehzahl (n_{z}) des den Kompressor antreibenden Elektromotors bestimmt wird,
**dass** die Zeit bis zum Ausschaltzeitpunkt gemessen und
die Drehzahl des Kompressormotors kontinuierlich oder in aufeinanderfolgenden Stufen erhöht wird, wenn der Thermostat nicht innerhalb der vorbestimmten Laufzeit den Kompressormotor ausschaltet, und
**dass** nach dem erneuten Einschalten des Kompressormotors durch den Thermostaten dieser mit einer bestimmten gegenüber der letzten Schlussdrehzahl erniedrigten Drehzahl wieder anläuft, die aus der Anfangsdrehzahl (n_{z}) der vorhergehenden Laufzeit, der Enddrehzahl der vorhergehenden Laufzeit und der Zeitdifferenz Δt zwischen der Zeit bis zum Ausschalten (tₐ) und der vorbestimmten günstigen Zeit (t_{c}) der vorhergehenden Laufzeit bestimmt wird.

2. Verfahren nach Anspruch 1, **dadurch gekennzeichnet, dass** die niedrigere Drehzahl, mit der der Kompressormotor nach einer Laufzeit wieder anläuft, die kürzer als die vorbestimmte Laufzeit günstige Laufzeit (t_{c}) gewesen ist, aus der Drehzahl aus der vorhergehenden Laufzeit, der vorhergehenden Laufzeit und der günstigen Laufzeit t_{c} bestimmt wird.

3. Verfahren nach Anspruch 1, **dadurch gekennzeichnet, dass** die Drehzahl, mit der der Kompressormotor nach einer Laufzeit wieder anläuft, die kürzer als die vorbestimmte Laufzeit gewesen ist, durch Absenken der Drehzahl um einen bestimmten Betrag bestimmt wird.

## Claims

1. Method for regulating the rotational speed of a compressor motor of a refrigerating or freezing device having a thermostat which generates the switch-on and switch-off signals for the compressor motor and which switches on and off the compressor, including a possibly associated control unit, **characterized in that**, with respect to the device, a predetermined favourable running time (t_{c}) of the compressor in relation to the energy consumption of the compressor motor at a basic rotational speed (n_{z}) of the electric motor which drives the compressor is determined, **in that** the time up to the switch-off time is measured, and the rotational speed of the compressor motor is increased continuously or in successive increments if the thermostat does not switch off the compressor motor within the predetermined running time, and **in that**, after the compressor motor has been switched on again by the thermostat, said compressor motor starts up again at a specific rotational speed which is reduced in comparison with the last final rotational speed and which is determined from the initial rotational speed (n_{z}) of the previous running time, the final rotational speed of the preceding running time and the time difference Δt between the time up to the switching off (tₐ) and the predetermined favourable time (t_{c}) of the previous running time.

2. Method according to Claim 1, **characterized in that** the lower rotational speed at which the compressor motor starts up again after a running time which has been shorter than the predetermined favourable running time (t_{c}) is determined from the rotational speed from the previous running time, the previous running time and the favourable running time t_{c}.

3. Method according to Claim 1, **characterized in that** the rotational speed at which the compressor motor starts up again after a running time which has been shorter than the predetermined running time is determined by reducing the rotational speed by a specific absolute value.

## Revendications

1. Procédé de réglage du nombre de tours d'un moteur de compresseur d'un appareil de réfrigération ou de congélation avec un thermostat, qui produit les signaux de mise en marche et de coupure du moteur de compresseur, respectivement qui met en et hors service le compresseur, y compris une unité de commande éventuellement associée,
**caractérisé en ce que** par rapport à l'appareil, une durée de fonctionnement avantageuse prédéterminée (t_{c}) du compresseur est déterminée par rapport à la consommation d'énergie du moteur de compresseur lors d'un nombre de tours de base (n_{z}) du moteur électrique entraînant le compresseur,
**en ce que** le temps jusqu'au point de coupure est mesuré et
**en ce que** la vitesse de rotation du moteur de compresseur est augmentée continuellement ou par paliers successifs si le thermostat ne met pas hors service le moteur de compresseur à l'intérieur de la durée de fonctionnement prédéterminée, et
**en ce qu'**après la remise en service du moteur de compresseur par le thermostat, celui-ci redémarre à une vitesse de rotation déterminée, diminuée par rapport à la dernière vitesse de rotation finale, qui est déterminée à partir de la vitesse de rotation initiale (n_{z}) de la durée de fonctionnement précédente, de la vitesse de rotation finale de la durée de fonctionnement précédente et de la différence de temps Δt entre le temps jusqu'à la coupure (tₐ) et le temps avantageux prédéterminé (t_{c}) de la durée de fonctionnement précédente.

2. Procédé selon la revendication 1, **caractérisé en ce que** la vitesse de rotation plus basse, à laquelle le moteur de compresseur redémarre après une durée de fonctionnement, qui a été plus courte que la durée de fonctionnement avantageuse prédéterminée (t_{c}), est déterminée à partir de la vitesse de rotation de la durée de fonctionnement précédente, de la durée de fonctionnement précédente et de la durée de fonctionnement avantageuse t_{c}.

3. Procédé selon la revendication 1, **caractérisé en ce que** la vitesse de rotation, à laquelle le moteur du compresseur redémarre après une durée de fonctionnement, qui a été plus courte que la durée de fonctionnement prédéterminée, est déterminée par une diminution du nombre de tours d'une valeur déterminée.
